Europäisches Patentamt

(19) European Patent Office

Office européen des brevets

(11) Numéro de publication : **0 451 010 A1**

(12) # DEMANDE DE BREVET EUROPEEN

(21) Numéro de dépôt : 91400787.7

(22) Date de dépôt : 22.03.91

(51) Int. Cl.⁵ : **C03B 23/03, C03B 23/025,**
**C03B 35/24, C03B 35/14,**
**B65G 49/06, C03B 27/044**

(30) Priorité : 30.03.90 FR 9004097

(43) Date de publication de la demande :
**09.10.91 Bulletin 91/41**

(84) Etats contractants désignés :
**AT BE CH DE DK ES GB GR IT LI LU NL SE**

(71) Demandeur : SELAS S.A.
**71 rue Rivay**
**F-92300 Levallois-Perret (FR)**

(72) Inventeur : **Pernelle, Robert**
**Rue de la Tuilerie, Marsinval**
**F-78540 Vernouillet (FR)**
Inventeur : **Agius, Michel**
**Résidence les Belles Vues, Rue des Epagnes**
**F-95640 Santeuil (FR)**

(74) Mandataire : **Bouju, André**
**Cabinet André Bouju B.P. 6250**
**F-75818 Paris Cédex 17 (FR)**

(54) **Installation pour le chauffage, le formage et la trempe de feuilles de verre.**

(57) L'installation pour le chauffage, le formage et la trempe de feuilles de verre (8), comprend un four (1) de chauffage des feuilles de verre, au moins une chambre de formage (4) dite de formage standard et une chambre de trempe desdites feuilles de verre, des moyens pour supporter les feuilles de verre et les déplacer dans le four (1) et vers lesdites chambres.

L'installation comprend en outre, au moins une seconde chambre de formage (5) dite de formage profond, dans laquelle le formage des feuilles de verre est réalisé par pressage de celles-ci sur une surface inférieure convexe. Entre le four (1) et lesdites chambres de formage (4, 5) est prévue une chambre de retournement (3) comportant des moyens pour retourner lesdites feuilles de verre (8) avant leur introduction dans la seconde chambre de formage (5).

Utilisation notamment dans la fabrication des vitrages d'automobiles.

FIG. 2

La présente invention concerne une installation pour le chauffage, le formage et la trempe de feuilles de verre.

L'invention vise en particulier la fabrication de vitrages bombés tels que des vitres latérales ou des lunettes arrières ou le cas échéant des pare-brise d'automobiles.

Les vitrages automobiles trempés peuvent être classés en trois catégories :

- les petites surfaces peu bombées (vitres latérales) dites à bombage ou formage standard,
- les grandes surfaces peu bombées (certaines lunettes arrières),
- les surfaces très bombées ou de formes complexes (principalement des lunettes arrières) dites à bombage ou formage profond.

D'une part, généralement ces trois types de vitrage automobile sont produits dans trois types d'installation étudiées chacune pour produire un type de vitrage et ayant de très grosses difficultés sinon une impossibilité à produire les deux autres types de vitrage.

D'autre part, les vitrages à bombage ou formage profond généralement bombés par pressage entre deux surfaces de formage présentent des défauts dûs à la difficulté d'enroulement du vitrage autour de la surface de formage convexe et au fait que cette dernière surface est une surface de pressage continue, donc qui appuie sur toute la surface du vitrage.

Le but de la présente invention est de proposer une solution aux problèmes ci-dessus, à savoir une installation qui permette de réaliser un formage et une trempe sur n'importe quel type de verre automobile, en améliorant la qualité des vitrages à bombage ou formage profond.

L'installation visée par l'invention comprend un four de chauffage des feuilles de verre, au moins une chambre de formage dite de formage standard et une chambre de trempe desdites feuilles de verre, des moyens pour supporter les feuilles de verre et les déplacer dans le four et vers lesdites chambres.

Suivant l'invention, cette installation est caractérisée en ce qu'elle comprend au moins une seconde chambre de formage dite de formage profond, dans laquelle le formage des feuilles de verre est réalisé par pressage de celles-ci sur une surface inférieure convexe et en ce qu'entre le four et lesdites chambres de formage est prévue une chambre de retournement comportant des moyens pour retourner lesdites feuilles de verre avant leur introduction dans la seconde chambre de formage.

Ainsi, l'installation conforme à l'invention comprend au moins une chambre de formage standard et une chambre de formage profond. De ce fait, l'installation est capable de réaliser à la fois des formages standards et profonds et donc de produire tous les types de vitrages automobiles.

De plus, grâce à la chambre de retournement, il est possible de retourner les feuilles de verre avant de les acheminer vers la chambre de formage profond et donc d'amener la feuille de verre à l'état retourné sur la surface inférieure convexe de la chambre de formage profond sur laquelle elle est formée par pressage.

En revanche, lorsque l'on veut réaliser un formage standard, la feuille de verre n'est pas retournée et elle est amenée sur la surface de formage concave inférieure classique de la chambre de formage standard sur laquelle cette feuille est formée par pressage.

Selon une version préférée de l'invention, la surface de formage inférieure convexe de la chambre de formage profond présente un rebord périphérique dont le contour correspond à celui de la feuille à l'état formé, ce rebord entourant une cavité.

Ainsi, lors du formage profond, la feuille de verre n'est en contact qu'avec le rebord de la surface convexe inférieure, de sorte que toute la partie centrale de la feuille est libre et ne risque pas d'être marquée ou présenter des défauts.

De préférence, la cavité située à l'intérieur du rebord périphérique de la surface convexe de formage est munie de trous de soufflage d'air chaud, ce qui permet d'établir sous la feuille une pression d'air suffisante pour compenser le propre poids de la feuille de verre en position sur le rebord. On évite ainsi tout risque d'affaissement et de déformation de la feuille de verre dans la cavité précitée.

Selon une version avantageuse de l'invention, lesdits moyens pour retourner les feuilles de verre comprennent un plateau monté en rotation dans ladite chambre de retournement, ce plateau étant creux et comportant au moins une face pourvue d'une série d'ouvertures réparties sur l'ensemble de cette face, l'intérieur de ce plateau étant relié à des moyens d'aspiration pour créer une dépression à l'intérieur dudit plateau, suffisante pour plaquer une feuille de verre sur ladite face pourvue d'ouvertures.

Ce plateau de retournement maintient ainsi par aspiration, la feuille de verre qui peut ainsi être retournée et déplacée vers la chambre de formage profond.

Selon une version préférée de l'invention, l'installation comprend une série de rouleaux parallèles et rotatifs pour supporter les feuilles de verre et les déplacer vers la chambre de retournement et/ou vers une chambre de formage alignée avec le four de chauffage, des moyens étant prévus en outre pour prélever les feuilles de verre desdits rouleaux pour les transférer vers la ou lesdites chambres.

De préférence, lesdits moyens comprennent un plateau aspirant mobile en translation au-dessus des rouleaux supportant les feuilles de verre et parallèlement à ces rouleaux, ce plateau étant lui-même pourvu de rouleaux situés dans un plan parallèle à celui des rouleaux supportant les feuilles de verre, les rouleaux du plateau faisant saillie sous la face infé-

3

rieure de ce plateau et des ouvertures d'aspiration étant ménagées entre lesdits rouleaux.

Ce plateau aspirant permet ainsi de déplacer les feuilles de verre vers la chambre de retournement ou directement vers la chambre de formage standard, la force d'application de la feuille de verre sur les rouleaux du plateau étant très voisine de zéro.

Selon une particularité avantageuse de l'invention, les rouleaux portés par le plateau sont entraînés en rotation.

Ainsi, en même temps que le plateau déplace une feuille de verre, selon un mouvement de translation, les rouleaux avec lesquels la feuille de verre est en contact déplacent la feuille parallèlement au plateau, ce qui permet :

– d'éviter que la feuille ne soit marquée au contact des rouleaux, et

– de régler la position de la feuille par rapport au plateau aspirant.

D'autres particularitis et avantages de l'invention apparaîtront encore dans la description ci-après.

Aux dessins annexés donnés à titre d'exemples non limitatifs :

– la figure 1 est une vue en plan montrant l'emplacement des différentes unités de l'installation selon l'invention,

– la figure 2 est une vue en coupe longitudinale du four, des chambres d'aspiration, de retournement et de formage standard de l'installation,

– la figure 3 est une vue en coupe longitudinale des chambres d'aspiration, de retournement et de formage standard,

– la figure 4 est une vue en coupe selon le plan IV-IV de la figure 3,

– la figure 5 est une vue de dessous partielle du plateau aspirant,

– la figure 6 est une vue en coupe suivant le plan VI-VI de la figure 3, montrant la chambre de retournement et la chambre de formage profond,

– la figure 7 est une vue en coupe selon le plan VII-VII de la figure 1,

– la figure 8 est une vue en coupe selon le plan VIII-VIII de la figure 3,

– la figure 9 est une vue de dessus partielle du plateau de retournement,

– la figure 10 est une vue de dessus de la partie inférieure de la chambre de formage standard.

L'installation telle que représentée sur les figures annexées pour le chauffage, le formage et la trempe de feuilles de verre, comprend un four 1 de chauffage des feuilles de verre, une chambre d'aspiration 2, une chambre de formage standard 4, une chambre de formage profond 5 et une chambre de trempe 6. Toutes ces chambres, à l'exception de celle de trempe, sont chauffées à une température suffisante pour maintenir les feuilles de verre à l'état plastique.

L'installation comprend également des moyens pour supporter les feuilles de verre et les déplacer horizontalement dans le four 1 et vers lesdites chambres 2 à 6.

Conformément à l'invention, l'installation comprend en outre, entre le four 1 et les chambres de formage 4 et 5, une chambre de retournement 3 comportant des moyens pour retourner lesdites feuilles de verre.

Dans l'exemple représenté, le four 1, la chambre d'aspiration 2, la chambre de retournement 3 et la chambre de formage standard 4 sont alignées, tandis que la chambre de formage profond 5 et la chambre de trempe 6 sont situées à côté respectivement de la chambre de retournement 3 et la chambre de formage 4. Toutes les parois de ces chambres sont recouvertes par un revêtement réfractaire 7.

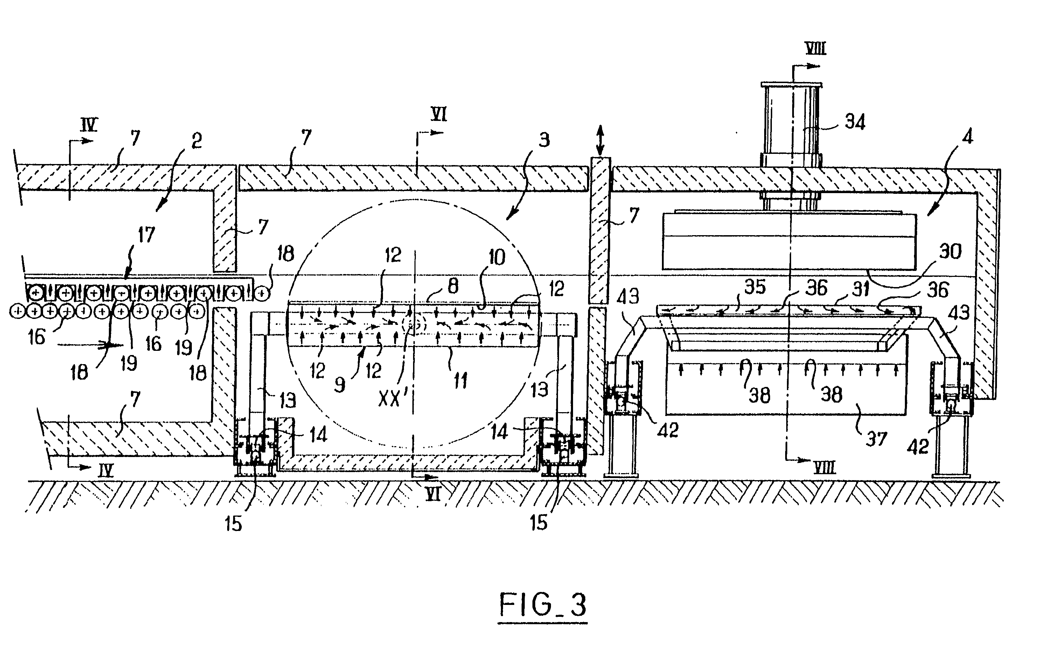

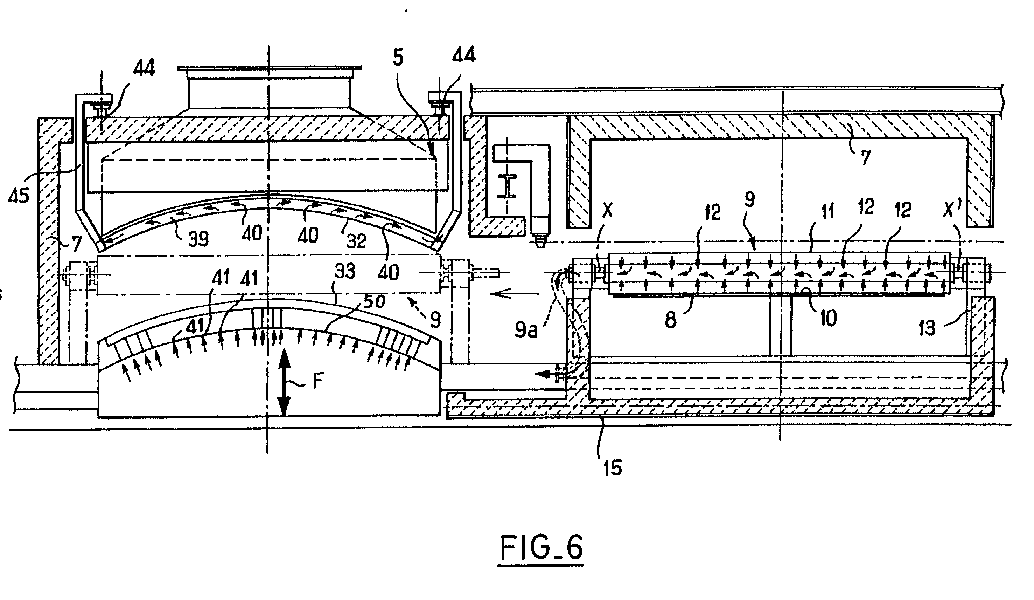

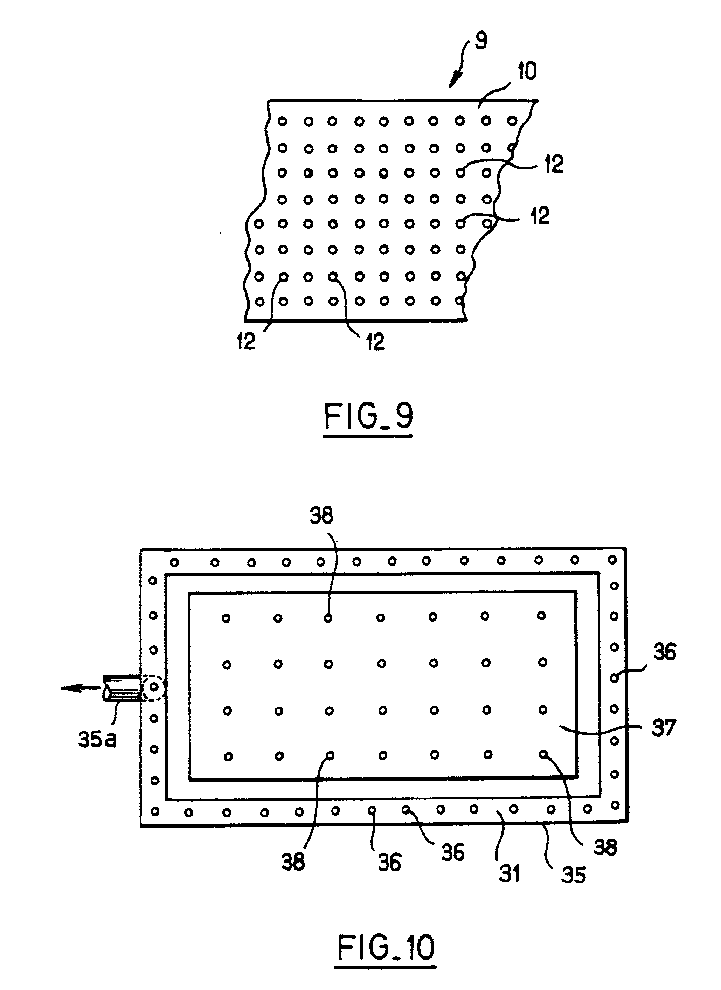

Les moyens pour retourner les feuilles de verre 8 comprennent un plateau 9 monté en rotation autour d'un axe X-X' dans la chambre de retournement 3. Ce plateau 9 est creux et comporte sur ses deux faces opposées 10, 11 une série d'ouvertures 12 réparties sur l'ensemble de ces faces (voir figures 3 et 9). L'intérieur du plateau 9 est relié par une conduite 9a (voir fig. 6) à des moyens d'aspiration telle qu'une turbine non représentée, pour créer une dépression à l'intérieur du plateau 9, suffisante pour plaquer une feuille de verre 8 sur la face 10 ou 11 pourvue d'ouvertures 12.

Par ailleurs, le plateau 9 pour retourner les feuilles de verre 8 est supporté par des moyens permettant de déplacer successivement les feuilles de verre retournées 8 vers la chambre de formage profond 5.

A cet effet, (voir figures 3 et 6), les extrémités opposées de l'axe X-X' de rotation du plateau 9 sont supportées par des montants 13 reposant par des galets 14 sur un chemin de roulement 15 qui s'étend entre la chambre de retournement 3 et la chambre de formage profond 5.

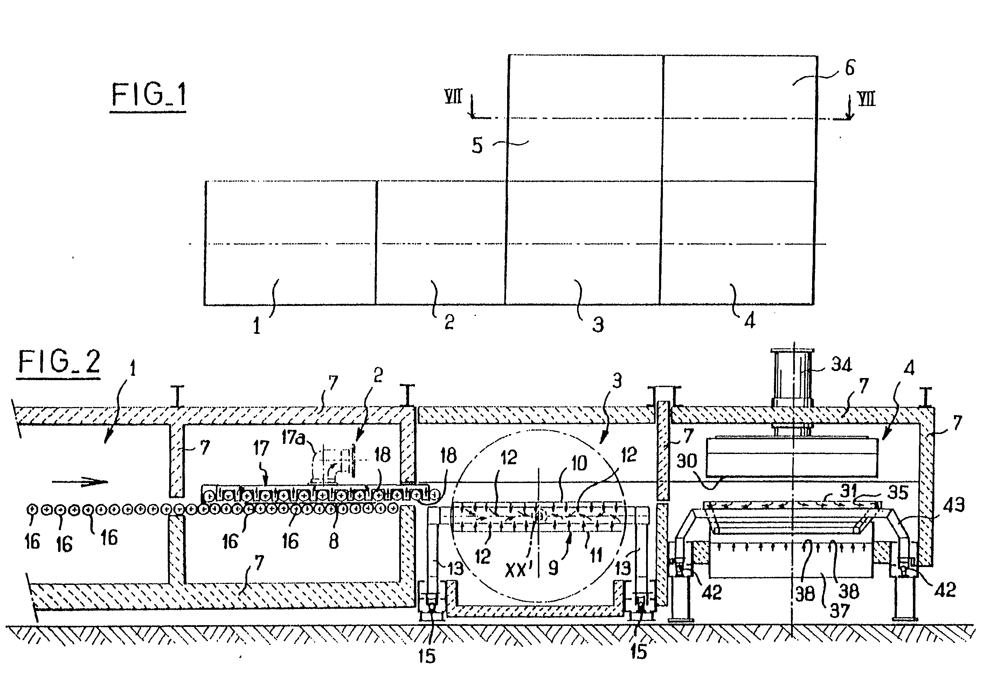

Les figures 2 et 3 montrent qu'à l'intérieur du four 1 et de la chambre d'aspiration 2 est prévue une série de rouleaux parallèles et rotatifs 16 pour supporter les feuilles de verre 8 (voir figure 2) et les déplacer horizontalement vers la chambre de retournement 3 et/ou vers la chambre de formage standard 4 qui est alignée avec le four de chauffage 1.

Selon l'invention, des moyens sont prévus en outre pour prélever les feuilles de verre 8 desdits rouleaux 16 pour les transférer vers la ou lesdites chambres 3, 4.

Dans l'exemple représenté, lesdits moyens sont adaptés pour aspirer les feuilles de verre 8.

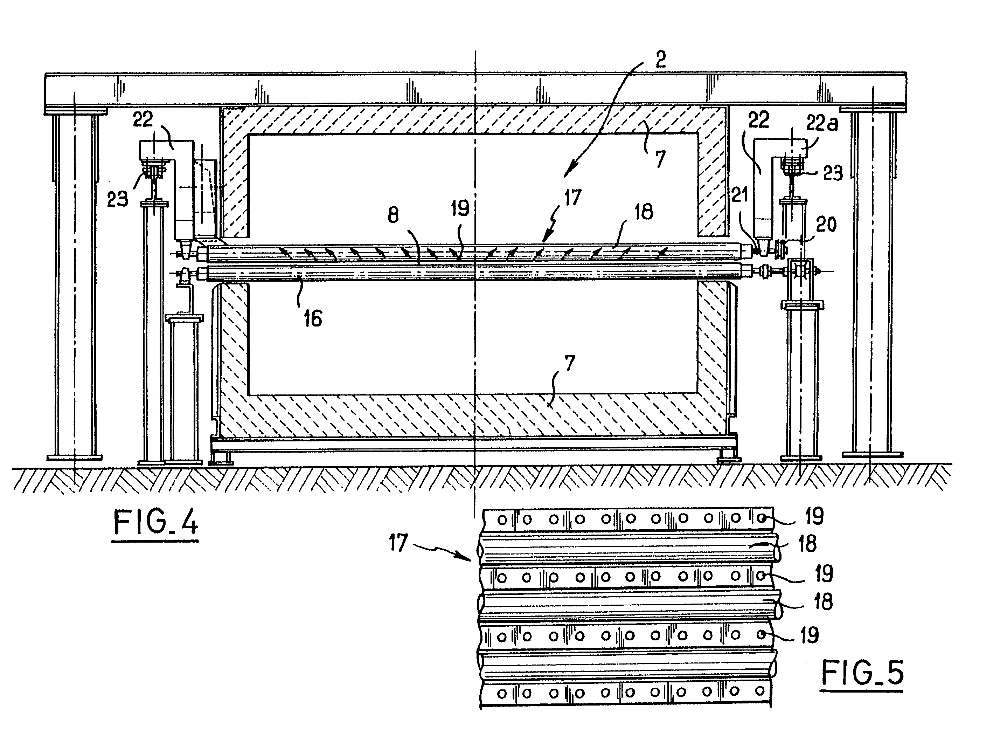

Ces moyens comprennent (voir figures 2, 3, 4 et 5) un plateau 17 aspirant mobile en translation au-dessus des rouleaux 16 supportant les feuilles de verre 8 et parallèlement à ces rouleaux 16. Ce plateau est lui-même pourvu de rouleaux 18 situés dans un plan parallèle à celui des rouleaux 16 supportant les feuilles de verre 8. Les rouleaux 18 du plateau 17 font saillie sous la face inférieure de ce plateau 17 et des ouvertures d'aspiration 19, sont ménagées entre les rouleaux 18 (voir figure 5).

L'intérieur du plateau 17 est relié à une conduite 17a (Fig. 2) elle-même reliée à une turbine d'aspiration non représentée.

On voit en outre à la figure 4, que les rouleaux 18 portés par le plateau 17 sont entraînés en rotation par des poulies 20 montées à l'extrémité de leur axe 21 et reliées par un organe de transmission à un moteur non représenté.

Par ailleurs, les extrémités des axes 21 des rouleaux 18 du plateau d'aspiration 17 sont soutenues par des bras 22 dont l'extrémité supérieure 22a repose sur un chemin de roulement 23 qui s'étend dans la chambre d'aspiration 2 et traverse les chambres de retournement 3 et la chambre de formage 4.

Par ailleurs, la longueur du plateau d'aspiration 17 mesurée dans la direction de son déplacement dépasse celle des feuilles de verre 8.

D'autre part, le plateau de retournement 9 des feuilles de verre 8 présente une face 10 destinée à recevoir les feuilles de verre 8, située dans le prolongement des rouleaux 16 supportant les feuilles de verre, de sorte que le plateau d'aspiration 17 peut passer au-dessus du plateau de retournement 9, comme le montre la figure 3.

Comme indiqué précédemment, l'installation conforme à l'invention comprend une chambre de formage standard 4 et une chambre de formage profond 5. La chambre de formage standard 4 reçoit les feuilles de verre 8 dans la position qu'elles occupent sur les rouleaux 16 qui les supportent, tandis que la chambre de formage profond 5 reçoit les feuilles 8 en position retournée, grâce au plateau de retournement 9.

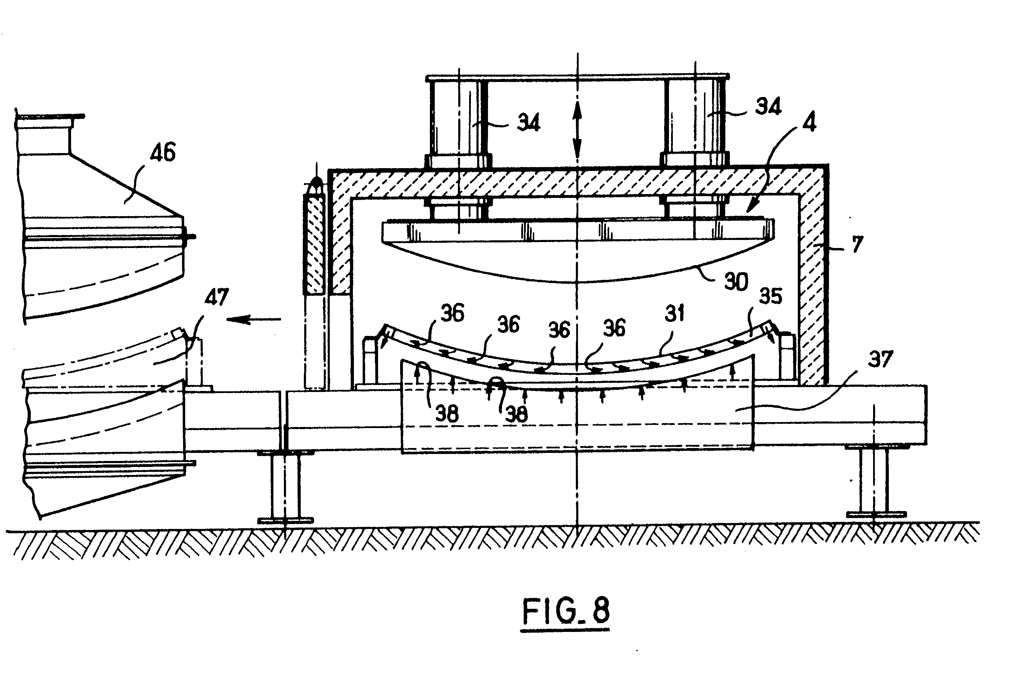

Les chambres de formage 4 et 5 comprennent chacune (voir figures 8 et 6) deux surfaces de formage 30, 31 ; 32, 33 mobiles l'une vers l'autre. L'une de ces surfaces est convexe et l'autre est concave.

Dans le cas de la chambre de formage standard 4 (voir figure 8), la surface de formage concave 31 est mobile horizontalement vers la chambre de trempe 6 et la surface de formage convexe 30 est mobile verticalement vers cette dernière, grâce à des mécanismes de commande 34.

Dans le cas de la chambre de formage profond 5 (voir figure 6), la surface de formage concave 32 est mobile horizontalement vers la chambre de trempe 6 et la surface de formage convexe 33 est mobile verticalement vers cette dernière (voir flèche F sur la figure 6).

Par ailleurs, dans la chambre de formage standard 4, la surface de formage concave 31 est située à la partie inférieure de la chambre et comporte (voir également la figure 10) un anneau creux 35 destiné à recevoir la feuille 8 à former et dont le contour correspond à celui de la feuille à l'état formé. Cet anneau 35 présente sur sa surface 31 destinée à recevoir une feuille de verre 8, une série de trous 36 communiquant avec l'intérieur de cet anneau 35 qui est relié par une conduite 35a (voir figure 10) à des moyens d'aspiration (non représentés) pour créer une dépression à l'intérieur de cet anneau 35.

Par ailleurs, sous l'anneau 35 est disposé (voir figures 8 et 10) un corps 37 présentant une série de trous 38 reliés à des moyens (non représentés) pour souffler de l'air chaud sous une feuille de verre 8 reposant sur l'anneau 35.

Dans la chambre de formage profond 5 (voir figure 6) la surface de formage concave mobile horizontalement 32 est située à la partie supérieure de la chambre et comporte un anneau creux 39 destiné à recevoir la feuille à former. Le contour de cet anneau 39 correspond à celui de la feuille à l'état formé et présente sur sa surface 32 destinée à recevoir la feuille, une série de trous 40 communiquant avec l'intérieur de cet anneau 39 et avec des moyens d'aspiration (non représentés) pour créer une dépression en son intérieur.

D'autre part, la surface de formage convexe et mobile verticalement 33 située à la partie inférieure de la chambre de formage profond 5 comporte un rebord périphérique destiné à correspondre au contour de la feuille à l'état formé qui entoure une cavité 50 présentant une série de trous 41 reliés à des moyens (non représentés) pour souffler de l'air chaud sous la feuille de verre, de façon à éviter l'affaissement de la feuille de verre.

On va maintenant décrire le fonctionnement de l'installation conforme à la présente invention.

Les feuilles de verre plates 8 reposant sur les rouleaux 16 sont d'abord chauffées dans le four 1 à une température comprise entre 600 et 700°C pour les rendre aptes au formage ultérieur.

Les feuilles chauffées sont ensuite acheminées par les rouleaux rotatifs 16 vers la chambre d'aspiration 2 qui est également chauffée à une certaine température pour éviter tout refroidissement des feuilles de verre. Le plateau 17 d'aspiration est positionné au-dessus d'une feuille de verre 8. A la mise en route des moyens d'aspiration, la feuille de verre est aspirée vers le plateau 17 situé à la proximité immédiate de cette feuille, de sorte que celle-ci vient légèrement en contact contre les rouleaux 18 du plateau aspirant 17.

Lorsque la feuille de verre 8 doit subir un formage standard, le plateau 17 est déplacé sur son chemin de roulement 23 directement vers la chambre 4 de formage standard.

Lors de ce déplacement, le plateau 17 passe au-dessus du plateau 9 de retournement.

Par ailleurs, lors de ce déplacement, la feuille de verre 8 plaquée sous le plateau 17 d'aspiration subit une translation par rapport à ce plateau, par rotation des rouleaux 18 contre lesquels la feuille 8 est en contact, ce qui a pour effet d'éviter le marquage de la feuille de verre par contact avec ces rouleaux 18 et de permettre le positionnement de la feuille de verre 8 au-dessus de l'anneau 35 de la chambre de formage 4. Bien entendu, la vitesse de rotation des rouleaux 18 sera relativement réduite afin que la vitesse de déplacement de la feuille 8 par rapport au plateau soit inférieure à la vitesse de déplacement de ce plateau 17.

A ce sujet, il convient bien entendu que la longueur du plateau 17 soit assez nettement supérieure à celle des feuilles à transporter.

En fin de course, le plateau 17 amène la feuille de verre 8 juste au-dessus de l'anneau 35 constituant la surface de formage inférieure de la chambre 4.

Il suffit ensuite de couper l'aspiration pour libérer la feuille de verre du plateau 17 pour qu'elle se dépose sur l'anneau 35.

Dès le retour du plateau 17, on commande la descente de la surface de formage convexe 30 pour adapter le profil de formage de la feuille de verre à celui des surfaces convexe 30 et concave 31.

En même temps, on envoie des jets d'air chaud, par les trous 38, vers la surface inférieure de la feuille 8 pour maintenir celle-ci à la température voulue et pour éviter qu'elle se déforme par gravité à travers l'anneau 35.

Lorsqu'on veut procéder à un formage profond, le plateau 17 situé dans la chambre d'aspiration 2 et maintenant sous lui, une feuille de verre 8 est déplacé vers la chambre de retournement 3.

Lorsque la feuille de verre 8 est située exactement au-dessus du plateau 9 de retournement, l'aspiration est interrompue de façon que la feuille de verre 8 puisse se déposer sur la face supérieure 10 du plateau 9. Une dépression est alors réalisée à l'intérieur du plateau 9 de façon à plaquer par aspiration la feuille 8 sur le dessus de ce plateau.

On commande alors la rotation du plateau 9 autour de son axe X-X' de façon à le retourner de 180° et que la feuille de verre 8 soit située sous le plateau. La feuille de verre 8 reste plaquée sous le plateau du fait de l'aspiration. On peut alors déplacer le plateau 9 le long des chemins de roulement 15 vers la chambre de formage profond 5.

Lorsque le plateau 9 est situé entre les surfaces de formage 32 et 33 (voir position en traits mixtes sur la figure 6), l'aspiration est coupée et la feuille de verre 8 se dépose sur la surface de formage inférieure et convexe 33. Le plateau de retournement 9 est alors ramené vers la chambre de retournement 3 pour recevoir après rotation de 180° une nouvelle feuille de verre 8.

Dès que le plateau 9 a quitté la chambre de formage 5, la surface de formage 33 sur laquelle repose la feuille de verre 8 se déplace vers le haut pour appliquer la feuille contre l'anneau 39 et former ainsi cette feuille suivant le profil des surfaces 33 et 32.

Pendant cette opération, des jets d'air chaud sont envoyés vers la feuille 8 par les trous 41 pour éviter l'affaissement de cette feuille, tandis qu'une dépression est réalisée dans l'anneau 39 afin de plaquer la périphérie de la feuille de verre 8 contre la surface 32 de l'anneau 39 et ainsi éviter tout glissement latéral de la feuille 8.

Après formage des feuilles de verre 8, soit dans la chambre de formage standard 4, soit dans la chambre de formage profond 5, les feuilles de verre 8 sont déplacées successivement vers la chambre de trempe 6.

Lorsqu'une feuille de verre 8 a été formée dans la chambre standard 4, elle est déplacée vers la chambre de trempe 6, le long des chemins de roulement 42 (voir figure 2) sur lesquels prend appui le bâti 43 qui supporte l'anneau 35 qui supporte la feuille de verre formée 8.

Lorsqu'une feuille de verre 8 a été formée dans la chambre de formage profond 4, elle est déplacée vers la chambre de trempe 6, le long des chemins de roulement 44 (voir figure 6) sur lesquels prend appui le bâti 45 auquel est suspendu l'anneau 39 qui maintient par aspiration la feuille de verre 8 ayant subi un formage profond.

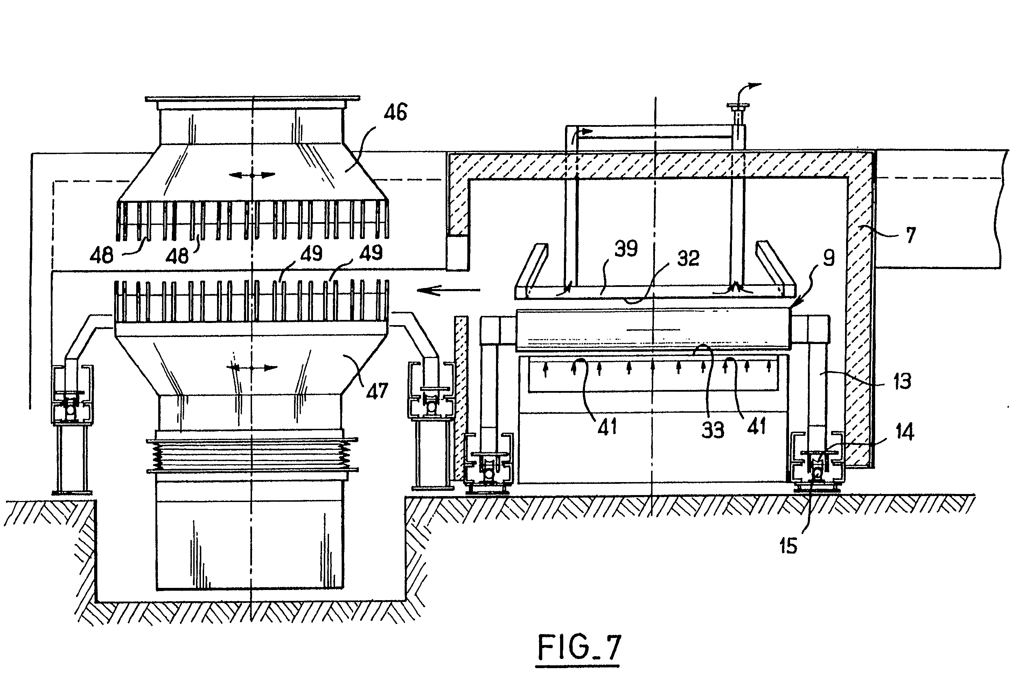

Lors de la trempe, la feuille de verre 8 est placée (voir figure 7) entre deux corps 46, 47 présentant des canaux verticaux 48, 49 qui envoient de part et d'autre de la feuille de verre 8 des jets gazeux destinés à la trempe de la feuille de verre 8.

Bien entendu, l'invention n'est pas limitée à l'exemple de réalisation que l'on vient de décrire et on peut apporter à celui-ci de nombreuses modifications sans sortir du cadre de l'invention.

Ainsi, toutes les chambres pourraient être alignées les unes à la suite des autres.

## Revendications

1. Installation pour le chauffage, le formage et la trempe de feuilles de verre (8), comprenant un four (1) de chauffage des feuilles de verre, au moins une chambre de formage (4) dite de formage standard et une chambre de trempe (6) desdites feuilles de verre, des moyens pour supporter les feuilles de verre et les déplacer dans le four (1) et vers lesdites chambres, caractérisé en ce qu'elle comprend en outre, au moins une seconde chambre de formage (5) dite de formage profond, dans laquelle le formage des feuilles de verre est réalisé par pressage de celles-ci sur une surface inférieure convexe et en ce qu'entre le four (1) et lesdites chambres de formage (4, 5) est prévue une chambre de retournement (3) comportant des moyens pour retourner lesdites feuilles de verre (8) avant leur introduction dans la seconde chambre de formage (5).

2. Installation conforme à la revendication 1, caractérisée en ce que la surface de formage inférieure convexe (33) de la chambre de formage profond (5) présente un rebord périphérique dont le contour correspond à celui, de la feuille à l'état formé, ce rebord entourant une cavité (50).

3. Installation conforme à la revendication 2, caractérisée en ce que la cavité (50) située entre le rebord périphérique de la surface de formage convexe (33) est munie de trous (41) de soufflage d'air chaud.

4. Installation conforme à l'une des revendications 1 à 3, caractérisée en ce que lesdits moyens pour retourner les feuilles de verre comprennent un plateau (9) monté en rotation dans ladite chambre de retournement (3), ce plateau (9) étant creux et comportant au moins une face (10) pourvue d'une série d'ouvertures (12) réparties sur l'ensemble de cette face, l'intérieur de ce plateau (9) étant relié à des moyens d'aspiration (9a) pour créer une dépression à l'intérieur dudit plateau, suffisante pour plaquer une feuille de verre (8) sur ladite face (10) pourvue d'ouvertures (12).

5. Installation conforme à la revendication 4, caractérisée en ce que deux faces opposées (10, 11) du plateau (9) sont pourvues d'ouvertures (12).

6. Installation conforme à l'une des revendications 1 à 5, caractérisée en ce que les moyens pour retourner les feuilles de verre (8) sont supportés par des moyens permettant de déplacer les feuilles de verre retournées vers la chambre de formage (5).

7. Installation conforme aux revendications 4 à 6, caractérisée en ce que le plateau (9) comporte un axe (X-X') sur lequel il est monté en rotation et dont les extrémités opposées sont supportées par des montants (13) reposant par des galets (14) sur un chemin de roulement (15).

8. Installation conforme à l'une des revendications 1 à 7, caractérisée en ce qu'elle comprend une série de rouleaux (16) parallèles et rotatifs pour supporter les feuilles de verre (8) et les déplacer horizontalement vers la chambre de retournement (3) et/ou vers une chambre de formage alignée (4) avec le four de chauffage (1), des moyens étant prévus en outre pour prélever les feuilles de verre (8) desdits rouleaux (16) pour les transférer vers la ou lesdites chambres.

9. Installation conforme à la revendication 8, caractérisée en ce que lesdits moyens sont adaptés pour aspirer lesdites feuilles de verre (8).

10. Installation conforme à la revendication 9, caractérisée en ce que lesdits moyens comprennent un plateau aspirant (17) mobile en translation au-dessus des rouleaux (16) supportant les feuilles de verre (8) et parallèlement à ces rouleaux, ce plateau (17) étant lui-même pourvu de rouleaux (18) situés dans un plan parallèle à celui des rouleaux (16) supportant les feuilles de verre, les rouleaux (18) du plateau (17) faisant saillie sous la face inférieure de ce plateau et des ouvertures d'aspiration (19) étant ménagées entre lesdits rouleaux (18).

11. Installation conforme à la revendication 10, caractérisée en ce que les rouleaux (18) portés par le plateau (17) sont entraînés en rotation.

12. Installation conforme à l'une des revendications 10 ou 11, caractérisée en ce que la longueur du plateau (17) mesurée dans la direction de son déplacement est supérieure à la longueur des feuilles de verre (8).

13. Installation conforme à l'une des revendications 4 à 12, caractérisée en ce que le plateau (9) de retournement des feuilles de verre (8) présente une face (10) destinée à recevoir les feuilles de verre, située dans le prolongement des rouleaux (16) supportant les feuilles de verre.

14. Installation conforme à l'une des revendications 8 à 13, caractérisée en ce qu'elle comprend une chambre de formage standard (4) recevant les feuilles dans la position qu'elles occupent sur les rouleaux (16) qui les supportent.

15. Installation conforme à la revendication 14, caractérisée en ce que la chambre de formage standard (4) comprend une surface de formage concave (31) située à la partie inférieure de la chambre et qui comporte un anneau creux (35) destiné à recevoir la feuille (8) à former et dont la contour correspond à celui de la feuille à l'état formé, cet anneau (35) présentant sur sa surface (31) destinée à recevoir la feuille, une série de trous (36) communiquant avec l'intérieur de cet anneau et avec des moyens d'aspiration pour créer une dépression à l'intérieur dudit anneau (35).

16. Installation conforme à la revendication 15, caractérisée en ce que sous l'anneau (35) est disposé un corps (37) présentant une série de trous (38) reliés à des moyens pour souffler de l'air chaud vers la feuille de verre (8).

17. Installation conforme à l'une des revendications 15 ou 16, caractérisée en ce que dans la chambre de formage profond (5) la surface de formage concave (32) est située à la partie supérieure de la chambre (5) et comporte un anneau creux (39) destiné à recevoir la feuille à former et dont le contour correspond à celui de la feuille à l'état formé, cet anneau (39) présentant sur sa surface (32) destinée à recevoir la feuille, une série de trous (40) communiquant avec l'intérieur de cet anneau (39) et avec des moyens d'aspiration pour créer une dépression à l'intérieur dudit anneau (39), pour plaquer la feuille de verre sur l'anneau durant son transport vers la chambre de trempe (6).

EP 0 451 010 A1

FIG_1

VII

VII

6

5

1    2    3    4

FIG_2

1    7    2    34    4    7

7    17    17a    18    18    12    10    12    7    30    31    35    43

16    16    16    16    16    8    13    12    XX'    9    11    13    42    38    38    42    37

15    15

FIG_3

FIG_4

FIG_5

FIG_6

12

FIG_7

EP 0 451 010 A1

FIG. 8

FIG_9

FIG_10

## RAPPORT DE RECHERCHE EUROPEENNE

Office européen
des brevets

Numero de la demande

EP 91 40 0787

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-299869 (SAINT-GOBAIN VITRAGE) <br> * le document en entier * <br> --- | 1-4, 6-13 | C03B23/03 <br> C03B23/025 <br> C03B35/24 |
| A | PATENT ABSTRACTS OF JAPAN <br> vol. 12, no. 258 (C-513)(3105) 20 juillet 1988, <br> & JP-A-63 45138 (ASAHI GLASS CO LTD) 26 février 1988. <br> * le document en entier * <br> --- | 1, 15 | C03B35/14 <br> B65G49/06 <br> C03B27/044 |
| A | US-A-3680677 (G.H. BRANCH ET AL) <br> * le document en entier * <br> --- | 1, 8-12 | |
| A | US-A-3665730 (F.D. LINZER) <br> * le document en entier * <br> --- | 1 | |
| A | EP-A-267119 (SAINT-GOBAIN VITRAGE) <br> * le document en entier * <br> --- | 1 | |
| A | US-A-4711653 (R.G. FRANK) <br> * revendication 1; figures 1-2, 6-17 * <br> ----- | 1 | |

|  | DOMAINES TECHNIQUES RECHERCHES (Int. Cl.5) |
|---|---|
| | C03B <br> B65G |

Le présent rapport a été établi pour toutes les revendications

| Lieu de la recherche | Date d'achèvement de la recherche | Examinateur |
|---|---|---|
| BERLIN | 05 JUILLET 1991 | KUEHNE H.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

  & : membre de la même famille, document correspondant

EPO FORM 1503 03.82 (P0402)